(19) Europäisches Patentamt
European Patent Office
Office européen des brevets

(11) EP 3 961 763 A1

(12) **EUROPEAN PATENT APPLICATION**

(43) Date of publication:
**02.03.2022 Bulletin 2022/09**

(21) Application number: **20192751.4**

(22) Date of filing: **25.08.2020**

(51) International Patent Classification (IPC):
***H01M 4/1391*** *(2010.01)* ***H01M 4/36*** *(2006.01)*
***H01M 4/505*** *(2010.01)* ***H01M 4/62*** *(2006.01)*

(52) Cooperative Patent Classification (CPC):
**H01M 4/1391; H01M 4/366; H01M 4/505; H01M 4/62;** H01M 4/525; H01M 10/0525

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **BASF SE**
**67056 Ludwigshafen am Rhein (DE)**

(72) Inventors:
- **WU, Xiaohan**
**67063 Ludwigshafen am Rhein (DE)**
- **GARVE, Lennart Karl Bernhard**
**67056 Ludwigshafen (DE)**
- **MAITI, Sandipan**
**5290002 Ramat Gan (IL)**
- **SCLAR, Hadar**
**5290002 Ramat Gan (IL)**
- **MARKOVSKY, Boris**
**5290002 Ramat Gan (IL)**
- **AURBACH, Doron**
**5290002 Ramat Gan (IL)**

(74) Representative: **BASF IP Association**
**BASF SE**
**GBI-C006**
**67056 Ludwigshafen (DE)**

(54) **AT LEAST PARTIALLY COATED ELECTRODE ACTIVE MATERIAL, ITS MANUFACTURE AND USE**

(57) The present invention is directed towards a process for making an at least partially coated electrode active material wherein said process comprises the following steps:
(a) providing an electrode active material according to general formula $Li_{1+x}TM_{1-x}O_2$, wherein TM is a combination of Ni, Mn and, optionally, Co, and, optionally, at least one metal selected from Al, Nb, Ta, Zr, Ti and Zr, and x is in the range of from 0.05 to 0.2, and wherein the Mn content is at least 55 mol-% referring to TM,
(b) treating said electrode active material with at least one metal alkyl compound,
(c) treating the material obtained in step (b) with an oxidant or moisture,
(d) treating the material obtained from step (c) with a compound according to formula $M^1OR^1$ wherein $M^1$ is selected from Li, Na and K and wherein $R^1$ is selected from isopropyl, n-butyl and tert.-butyl,
(e) repeating the sequence of steps (b) to (d) from one to 30 times,
wherein steps (b) to (e) are performed in the gas phase

EP 3 961 763 A1

## Description

The present invention is directed towards a process for making an at least partially coated electrode active material wherein said process comprises the following steps:

(a) providing an electrode active material according to general formula $Li_{1+x}TM_{1-x}O_2$, wherein TM is a combination of Ni, Mn and, optionally, Co, and, optionally, at least one metal selected from Al, Nb, Ta, Zr, Ti and Zr, and x is in the range of from 0.05 to 0.2, and wherein the Mn content is at least 55 mol-% referring to TM,
(b) treating said electrode active material with at least one metal alkyl compound or at least one metal alkoxide,
(c) treating the material obtained in step (b) with an oxidant or moisture,
(d) treating the material obtained from step (c) with a compound according to formula $M^1OR^1$ wherein $M^1$ is selected from Li, Na and K and wherein $R^1$ is selected from isopropyl, n-butyl and tert.-butyl, and wherein $M^1OR^1$ is different from the metal alkoxide in step (b),
(e) repeating the sequence of steps (b) to (d) from one to 30 times,

wherein steps (b) to (e) are performed in the gas phase.

Lithium ion secondary batteries are modern devices for storing energy. Many application fields have been and are contemplated, from small devices such as mobile phones and laptop computers through car batteries and other batteries for e-mobility. Various components of the batteries have a decisive role with respect to the performance of the battery such as the electrolyte, the electrode materials, and the separator. Particular attention has been paid to the cathode materials. Several materials have been suggested, such as lithium iron phosphates, lithium cobalt oxides, and lithium nickel cobalt manganese oxides. Although extensive research has been performed the solutions found so far still leave room for improvement.

Currently, a certain interest in so-called manganese-rich electrode active materials may be observed, for example electrode active materials that contain at least 50 mole-% or even 75 mole-% or more of Mn, referring to the total metal content, metal referring to metals other than lithium.

One problem of lithium ion batteries is attributed to undesired reactions on the surface of the cathode active materials. Such reactions may be a decomposition of the electrolyte or the solvent or both. It has thus been tried to protect the surface without hindering the lithium exchange during charging and discharging. Examples are attempts to coat the cathode active materials with, e.g., aluminium oxide or calcium oxide, see, e.g., US 8,993,051.

In EP 3 486 980, specific high-manganese materials with a high energy density retention rate are disclosed. However, the cathode active materials disclosed suffer from a limited energy density as such.

Other theories assign undesired reactions to free LiOH or $Li_2CO_3$ on the surface. Attempts have been made to remove such free LiOH or $Li_2CO_3$ by washing the electrode active material with water, see, e.g., JP 4,789,066 B, JP 5,139,024 B, and US2015/0372300. However, in some instances it was observed that the properties of the resultant electrode active materials did not improve.

It was an objective of the present invention to provide a process for making electrode active materials, in particular Ni-rich electrode active materials with excellent electrochemical properties. It was also an objective to provide Ni-rich electrode active materials with excellent electrochemical properties.

Accordingly, the process defined at the outset has been found, hereinafter also referred to as "inventive process". The inventive process comprises five steps, steps (a), (b), (c), (d) and (e), in the context of the present invention also referred to as step (a) step (b) and step (c) etc., respectively. The commencement of steps (b) to (d) is sequential.

The inventive process refers to an at least partially coated material. The term "partially coated" as used in the context with the present invention refers to at least 80% of the particles of a batch of particulate material being coated, and to at least 50% of the surface of each particle being coated, for example 75 to 99.99% and preferably 80 to 90%.

The thickness of such coating may be very low, for example 0.1 to 5 nm. In other embodiments, the thickness may be in the range of from 6 to 15 nm. In further embodiments, the thickness of such coating is in the range of from 16 to 50 nm. The thickness in this context refers to an average thickness determined mathematically by calculating the amount of thickness per particle surface and assuming a 100% conversion.

Without wishing to be bound by any theory, it is believed that non-coated parts of particles do not react due to specific chemical properties of the particles, for example density of chemically reactive groups such as, but not limited to hydroxyl groups, oxide moieties with chemical constraint, or to adsorbed water.

In step (a), an electrode active material according to general formula $Li_{1+x}TM_{1-x}O_2$ is provided. TM is a combination of Ni, Mn and, optionally, Co, and, optionally, at least one metal selected from Al, Mg, Nb, Ta, Zr, Ti and Zr, and x is in the range of from 0.05 to 0.2, preferably 0.1 to 0.2, and wherein the Mn content is at least 55 mol-% referring to TM.

In a preferred embodiment, electrode active material provided in step (a) is of the composition $Li_{1+x}TM_{1-x}O_2$ wherein x is in the range of from 0.1 to 0.2 and TM is a combination of elements according to general formula (I)

$$(Ni_aCo_bMn_c)_{1-d}M_d \qquad (I)$$

wherein

- a is in the range of from 0.30 to 0.38,
- b being in the range of from zero to 0.05, preferably b is zero.
- c being in the range of from 0.60 to 0.70, and
- d being in the range of from zero to 0.05,

$$a + b + c = 1,$$

M is selected from Al, Ti, Zr, W, Mo, Mg, B, and combinations of at least two of the foregoing, with Al being preferred.

In one embodiment od the present invention, electrode active material provided in step (a) has a pressed density in the range of from 2.75 to 3.5 g/cm$^3$, preferably from 2.80 to 3.3 g/cm$^3$.

Electrode active materials according to step (a) have an average particle diameter D50 in the range of from 2 to 20 μm, preferably from 5 to 16 μm. The average particle diameter may be determined, e. g., by light scattering or LASER diffraction or electroacoustic spectroscopy. The particles are usually composed of agglomerates from primary particles, and the above particle diameter refers to the secondary particle diameter.

In one embodiment of the present invention electrode active materials provided in step (a) have a specific surface (BET), hereinafter also referred to as "BET surface", in the range of from 0.2 to 4.0 m$^2$/g, determined according to DIN-ISO 9277:2003-05, preferred are 0.5 to 2.0.

Some metals are ubiquitous such as sodium, calcium or zinc and traces of them virtually present everywhere, but such traces will not be taken into account in the description of the present invention. Traces in this context will mean amounts of 0.05 mol-% or less, referring to the total metal content TM.

In one embodiment of the present invention, the electrode active material provided in step (a) is comprised of secondary particles that are agglomerates of primary particles. Preferably, inventive material is comprised of spherical secondary particles that are agglomerates of primary particles. Even more preferably, such material is comprised of spherical secondary particles that are agglomerates of platelet primary particles.

In one embodiment of the present invention, primary particles of electrode active material provided in step (a) have an average diameter in the range from 1 to 2000 nm, preferably from 10 to 1000 nm, particularly preferably from 50 to 500 nm. The average primary particle diameter can, for example, be determined by SEM or TEM. SEM is an abbreviation of scanning electron microscopy, TEM is an abbreviation of transmission electron microscopy.

In one embodiment of the present invention, the volumetric energy density is in the range of from 2,750 to 3,500 W·h/l. The VED is defined as follows: VED = 1$^{st}$ cycle discharge capacity x average voltage x pressed density.

In one embodiment of the present invention, electrode active material provided in step (a) has a monomodal particle diameter distribution. In an alternative embodiment, inventive material has a bimodal particle diameter distribution, for example with a maximum in the range of from 3 to 6 μm and another maximum in the range of from 9 to 12 μm.

In one embodiment of the present invention, electrode active material provided in step (a) has a tap density in the range of from 1.20 to 1.80 g/cm$^3$, determined after tapping 2,000 times in a graduated cylinder.

Electrode active material provided in step (a) may be synthesized, e.g., by co-precipitating the metals TM as carbonate or preferably as hydroxide or, optionally, as oxyhydroxide, followed by mixing it with a source of lithium such as, but not limited to LiOH or $Li_2CO_3$, followed by a thermal treatment at a temperature in the range of from 800 to 950°C.

In step (b), said electrode active material with at least one metal alkyl compound or at least one metal alkoxide.

In one embodiment of the inventive process, step (b) is performed at a temperature in the range of from 15 to 1000°C, preferably 15 to 500°C, more preferably 20 to 350°C, and even more preferably 50 to 220°C. It is preferred to select a temperature in step (b) at which metal alkoxide or metal amide or alkyl metal compound, as the case may be, is in the gas phase.

In one embodiment of the present invention, step (b) is carried out at normal pressure but step (b) may as well be carried out at reduced or elevated pressure. For example, step (b) may be carried out at a pressure in the range of from 5 mbar to 1 bar above normal pressure, preferably 10 to 150 mbar above normal pressure. In the context of the present invention, normal pressure is 1 atm or 1013 mbar. In other embodiments, step (b) may be carried out at a pressure in the range of from 150 mbar to 560 mbar above normal pressure. In other embodiments, step (b) is carried out at a pressure of 100 to 1 mbar below normal pressure.

In a preferred embodiment of the present invention, alkyl metal compound or metal alkoxide or metal amide, respectively, is selected from $Al(R^1)_3$, $Al(R^1)_2OH$, $AlR^1(OH)_2$, $M^1(R^1)_{4-y}H_y$, $Al(OR^1)_3$, $M^2(OR^1)_4$, wherein $M^2$ is selected

from zirconium and titanium, and methyl alumoxane, wherein $R^1$ are different or equal and selected from $C_1$-$C_8$-alkyl, straight-chain or branched, preferably from $C_1$-$C_4$-alkyl, for example methyl, ethyl, n-propyl, isopropyl, -butyl, sec.-butyl, isobutyl, and tert.-butyl.

Metal alkoxides may be selected from $C_1$-$C_4$-alkoxides of aluminum, and of transition metals. Preferred transition metals are titanium and zirconium. Examples of alkoxides are methanolates, hereinafter also referred to as methoxides, ethanolates, hereinafter also referred to as ethoxides, propanolates, hereinafter also referred to as propoxides, and butanolates, hereinafter also referred to as butoxides. Specific examples of propoxides are n-propoxides and iso-propoxides. Specific examples of butoxides are n-butoxides, iso-butoxides, sec.-butoxides and tert.-butoxides. Combinations of alkoxides are feasible as well.

Preferred examples of metal $C_1$-$C_4$-alkoxides are $Ti[OCH(CH_3)_2]_4$, $Ti(OC_4H_9)_4$, $Zr(OC_4H_9)_4$, $Zr(OC_2H_5)_4$, $Al(OCH_3)_3$, $Al(OC_2H_5)_3$, $Al(O\text{-}n\text{-}C_3H_7)_3$, $Al(O\text{-}iso\text{-}C_3H_7)_3$, $Al(O\text{-}sec.\text{-}C_4H_9)_3$, and $Al(OC_2H_5)(O\text{-}sec.\text{-}C_4H_9)_2$.

Examples of aluminum alkyl compounds are trimethyl aluminum, triethyl aluminum, triisobutyl aluminum, and methyl alumoxane.

In one embodiment of the present invention, the amount of metal alkoxide or metal amide or alkyl metal compound is in the range of 0.1 to 1 g/kg electrode active material.

Preferably, the amount of metal alkoxide or metal amide or alkyl metal compound, respectively, is calculated to amount to 80 to 200% of a monomolecular layer on the electrode active material per cycle.

Step (b) of the inventive process as well as steps (c) and (d) - that will be discussed in more detail below - may be carried out in the same or in different vessels.

In one embodiment of the present invention, step (b) is performed in a rotary kiln, in a free fall mixer, in a continuous vibrating bed or a fluidized bed.

In a preferred embodiment of the present invention, the duration of step (b) is in the range of from 1 second to 2 hours, preferably 1 second up to 10 minutes.

In a third step, in the context of the present invention also referred to as step (c), the material obtained in step (b) is treated with moisture or an oxidant.

Examples of oxidants are ozone, oxygen/ozone mixtures, pure oxygen, $H_2O_2$ and organic peroxides, for example tert.-butyl peroxide, ozone and mixtures from oxygen and ozone are preferred, for example mixtures from 3 to 10 % by weight of ozone in oxygen.

In one embodiment of the present invention, step (c) is carried out at a temperature in the range of from 50 to 250°C. At higher temperatures within said interval, higher percentages of ozone are preferred.

In one embodiment of the present invention, step (c) is carried out at normal pressure but step (c) may as well be carried out at reduced or elevated pressure. For example, step (c) may be carried out at a pressure in the range of from 5 mbar to 1 bar above normal pressure, preferably 10 to 250 mbar above normal pressure. In the context of the present invention, normal pressure is ambient pressure, for example 1 atm or 1013 mbar at sea level. In different altitudes, ambient pressure may be lower. In other embodiments, step (c) may be carried out at a pressure in the range of from 150 mbar to 560 mbar above normal pressure.

Steps (b) and (c) and (d) may be carried out at the same pressure or at different pressures, preferred is at the same pressure.

Said moisture or oxidant may be introduced, e.g., by treating the material obtained in accordance with step (b) with moisture saturated inert gas, for example with moisture saturated nitrogen or moisture saturated noble gas, for example argon. Saturation may refer to normal conditions or to the reaction conditions in step (c).

In one embodiment of the present invention, step (c) is performed in a rotary kiln, in a free fall mixer, in a continuous vibrating bed or a fluidized bed.

In a preferred embodiment of the present invention, the duration of step (c) is in the range of from 1 second to 2 hours, preferably 1 second up to 5 minutes.

In step (d), the product obtained from step (c) is reacted with $M^1OR^1$ wherein $M^1$ is selected from Li, Na and K and wherein $R^1$ is selected from isopropyl, n-butyl and tert.-butyl, and wherein $M^1OR^1$ is different from the metal alkoxide in step (b). Preferred examples are n- sodium methoxide, sodium ethanolate, sodium isopropoxide, potassium methanolate, potassium ethanolate, and alkali metal tert.-butoxides such as lithium tert.-butoxide, sodium tert.-butoxide and potassium tert.-butoxide.

In one embodiment of the present invention, step (d) is performed in a rotary kiln, in a free fall mixer, in a continuous vibrating bed or a fluidized bed.

In one embodiment of the present invention, step (d) is carried out at a temperature in the range of from 50 to 300°C.

Steps (b) to (e) are performed in the gas phase. That means that the reactant - alkyl metal compound or metal alkoxide in step (b), moisture or oxidant in step (c), and $M^1OR^1$ in step (d) is in the gas phase but the electrode active material is not.

Step (e) includes repeating the sequence of steps (b) to (d) from one to 30 times, for example 5 to 30 times,

preferred are 10 to 25 times. Such repetition may also be referred to as cycle. The various cycles may be performed under varying conditions or - preferably - under the same conditions.

In one embodiment of the present invention, the reactor in which the inventive process is carried out is flushed or purged with an inert gas between steps (b) and (c) or between steps (c) and (d) or between steps (d) and (b), for example with dry nitrogen or with dry argon. Suitable flushing - or purging - times are 1 second to 30 minutes, preferably 1 second to 10 minutes. It is preferred that the amount of inert gas is sufficient to exchange the contents of the reactor of from one to 15 times. By such flushing or purging, the production of by-products such as separate particles of reaction product of metal alkoxide or metal amide or alkyl metal compound, respectively, with water can be avoided. In the case of the couple trimethyl aluminum and water, such by-products are methane and alumina or trimethyl aluminum that is not deposited on the particulate material, the latter being an undesired by-product. Said flushing may also take place after step (c), thus before another step (b). In this context, "dry" refers to a water content of less than 10 ppm by weight, for example 3 to 5 ppm.

In one embodiment of the present invention, each flushing step between (b) and (c) has a duration in the range of from one second to ten minutes.

In one embodiment of the present invention, the reactor is evacuated between steps (b) and (c) or between steps (c) and (d). Said evacuating may also take place after step (d), thus before another step (b). Evacuation in this context includes any pressure reduction, for example 10 to 1,000 mbar (abs), preferably 10 to 500 mbar (abs).

Each of steps (b) and (c) and (d) may be carried out in a fixed bed reactor, in a fluidized bed reactor, in a forced flow reactor or in a mixer, for example in a compulsory mixer or in a free-fall mixer. Examples of fluidized bed reactors are spouted bed reactors. Examples of compulsory mixers are ploughshare mixers, paddle mixers and shovel mixers. Preferred are ploughshare mixers. Preferred ploughshare mixers are installed horizontally, the term horizontal referring to the axis around which the mixing element rotates. Preferably, the inventive process is carried out in a shovel mixing tool, in a paddle mixing tool, in a Becker blade mixing tool and, most preferably, in a ploughshare mixer in accordance with the hurling and whirling principle. Free fall mixers are using the gravitational force to achieve mixing. In a preferred embodiment, steps (b) and (c) of the inventive process are carried out in a drum or pipe-shaped vessel that rotates around its horizontal axis. In a more preferred embodiment, steps (b) and (c) of the inventive process are carried out in a rotating vessel that has baffles.

In one embodiment of the present invention, the rotating vessel has in the range of from 2 to 100 baffles, preferably 2 to 20 baffles. Such baffles are preferably flush mount with respect to the vessel wall.

In one embodiment of the present invention, such baffles are axially symmetrically arranged along the rotating vessel, drum, or pipe. The angle with the wall of said rotating vessel is in the range of from 5 to 45°, preferably 10 to 20°. By such arrangement, they can transport coated cathode active material very efficiently through the rotating vessel.

In one embodiment of the present invention, said baffles reach in the range of from 10 to 30% into the rotating vessel, referring to the diameter.

In one embodiment of the present invention, said baffles cover in the range of from 10 to 100%, preferably 30 to 80% of the entire length of the rotating vessel. In this context, the term length is parallel to the axis of rotation.

In a preferred embodiment of the present invention the inventive process comprises the step of removing the coated material from the vessel or vessels, respectively, by pneumatic conveying, e.g. 20 to 100 m/s.

In one embodiment of the present invention, the exhaust gasses are treated with water at a pressure above one bar and even more preferably higher than in the reactor in which steps (b) and (c) and (d) are performed, for example in the range of from 1.010 to 2.1 bar, preferably in the range of from 1.005 to 1.150 bar. The elevated pressure is advantageous to compensate for the pressure loss in the exhaust lines.

In one embodiment of the present invention, after step (e) a post-treatment is performed, for example a thermal post-treatment (f). Such thermal post-treatment (f) may be performed by treating the particulate electrode active material obtained after step (e) at a temperature in the range of from 150 to 800°C, preferably from 150 to 400°C, for example over a period of time in the range of from preferably from 180 to 350 °C, for example over a period of 10 minutes to 2 hours.

Electrode active materials treated according to the inventive process exhibit excellent electrochemical properties, especially with respect to long-term cycling stability and thermal stability.

A further aspect of the present invention is related to particulate electrode active material according to general formula $Li_{1+x}TM_{1-x}O_2$ wherein TM is a combination of Ni, Mn and, optionally, Co, and, optionally, at least one metal selected from Al, Mg, Nb, Ta, Zr, Ti and Zr, and x is in the range of from 0.05 to 0.2, wherein the outer surface of said particles is non-homogeneously coated with a combination of $Al_2O_3$, $Li_5AlO_4$ or $Li_2TiO_3$ or $Li_4Ti_5O_{12}$ or $Li_2ZrO_3$ and, optionally, at least one of $Na_5AlO_4$, $Na_2TiO_3$, $Na_2Ti_3O_7$ and $Na_2ZrO_3$. Such materials are also referred to as "inventive cathode active materials". Inventive cathode active materials are described in more detail below.

The composition of the outer surface is neglected in the formula $Li_{1+x}TM_{1-x}O_2$.

In a preferred embodiment, inventive cathode active material is of the composition $Li_{1+x}TM_{1-x}O_2$ wherein x is in the range of from 0.1 to 0.2 and TM is a combination of elements according to general formula (I)

$(Ni_aCo_bMn_c)_{1-d}M_d$ (I)

wherein

a is in the range of from 0.30 to 0.38,
b being in the range of from zero to 0.05, preferably b is zero.
c being in the range of from 0.60 to 0.70, and
d being in the range of from zero to 0.05,

$$a + b + c = 1,$$

M is selected from Al, Ti, Zr, W, Mo, Mg, B, and combinations of at least two of the foregoing, with Al being preferred.

The inventive cathode active materials are non-homogeneously coated. The term "non-homogeneously coated" as used in the context with the present invention refers to at least 80% of the particles of a batch of particulate material being coated, and to at least 50% of the surface of each particle being coated, for example 75 to 99.99% and preferably 80 to 90%, but either the thickness varying or the total coverage of the respective particle or both.

The thickness of such coating may be very low, for example 0.1 to 5 nm. In other embodiments, the thickness may be in the range of from 6 to 15 nm. The thickness in this context refers to an average thickness determined mathematically by calculating the amount of thickness per particle surface and assuming a 100% conversion.

In one embodiment of the present invention, the molar ratio of $Li_5AlO_4$ and $Na_5AlO_4$ is in the range of from 1:1 to 1:2 or to 2:3.

In one embodiment of the present invention, said coating comprises at least one further lithiated aluminum oxide species, for example $LiAlO_2$ and $LiAl_5O_8$. Said species are readily distinguishable by, e.g., TEM.

In one embodiment of the present invention, said coating additionally comprises at least one compound selected from $LiAlO_2$ and $LiAl_5O_8$, and preferably both, more preferably in a molar range of from 1:1 to 1:2 or even up to 2:3.

The inventive cathode active materials are particulate. Preferably, they have an average particle diameter D50 in the range of from 2 to 20 $\mu$m, preferably from 5 to 16 $\mu$m. The average particle diameter may be determined, e. g., by light scattering or LASER diffraction or electroacoustic spectroscopy. The particles are usually composed of agglomerates from primary particles, and the above particle diameter refers to the secondary particle diameter.

In one embodiment of the present invention inventive cathode active materials have a BET surface in the range of from 0.2 to 4.0 $m^2/g$, determined according to DIN-ISO 9277:2003-05, preferred are 0.5 to 2.0.

In one embodiment of the present invention, primary particles of inventive cathode active material have an average diameter in the range from 1 to 2000 nm, preferably from 10 to 1000 nm, particularly preferably from 50 to 500 nm. The average primary particle diameter can, for example, be determined by SEM or TEM. SEM is an abbreviation of scanning electron microscopy, TEM is an abbreviation of transmission electron microscopy.

In one embedment of the present invention, the press density of inventive cathode active materials is in the range of from 2.75 to 3.1 $g/cm^3$, determined at a pressure of 250 MPa, preferred are 2.85 to 3.10 $g/cm^3$.

In one embodiment of the present invention, inventive cathode active materials have a tap density in the range of from 1.20 to 1.80 $g/cm^3$, determined after tapping 2,000 times in a graduated cylinder.

Inventive materials are excellently suited as cathode active materials, especially since they display both a high energy density and a high energy density retention rate.

A further aspect of the present invention is directed to the use of inventive cathode active materials in or for the manufacture of a lithium ion battery, preferably in or for the manufacture of an all-solid-state lithium ion battery. In particular, inventive cathode active materials may be incorporated into a cathode (A) for an all-solid-state lithium ion battery. However, inventive cathode active materials are suitable for making lithium ion batteries based on liquid electrolytes as well. Electrodes comprising at least one electrode active material according to the present invention are hereinafter also referred to as inventive cathodes or cathodes according to the present invention.

Cathodes according to the present invention can comprise further components. They can comprise a current collector, such as, but not limited to, an aluminum foil. They can further comprise conductive carbon and a binder.

Suitable binders are preferably selected from organic (co)polymers. Suitable (co)polymers, i.e. homopolymers or copolymers, can be selected, for example, from (co)polymers obtainable by anionic, catalytic or free-radical (co)polymerization, especially from polyethylene, polyacrylonitrile, polybutadiene, polystyrene, and copolymers of at least two comonomers selected from ethylene, propylene, styrene, (meth)acrylonitrile and 1,3-butadiene. Polypropylene is also suitable. Polyisoprene and polyacrylates are additionally suitable. Particular preference is given to polyacrylonitrile.

In the context of the present invention, polyacrylonitrile is understood to mean not only polyacrylonitrile homopolymers but also copolymers of acrylonitrile with 1,3-butadiene or styrene. Preference is given to polyacrylonitrile homopolymers.

In the context of the present invention, polyethylene is not only understood to mean homopolyethylene, but also copolymers of ethylene which comprise at least 50 mol% of copolymerized ethylene and up to 50 mol% of at least one further comonomer, for example α-olefins such as propylene, butylene (1-butene), 1-hexene, 1-octene, 1-decene, 1-dodecene, 1-pentene, and also isobutene, vinylaromatics, for example styrene, and also (meth)acrylic acid, vinyl acetate, vinyl propionate, $C_1$-$C_{10}$-alkyl esters of (meth)acrylic acid, especially methyl acrylate, methyl methacrylate, ethyl acrylate, ethyl methacrylate, n-butyl acrylate, 2-ethylhexyl acrylate, n-butyl methacrylate, 2-ethylhexyl methacrylate, and also maleic acid, maleic anhydride and itaconic anhydride. Polyethylene may be HDPE or LDPE.

In the context of the present invention, polypropylene is not only understood to mean homopolypropylene, but also copolymers of propylene which comprise at least 50 mol% of copolymerized propylene and up to 50 mol% of at least one further comonomer, for example ethylene and α-olefins such as butylene, 1-hexene, 1-octene, 1-decene, 1-dodecene and 1-pentene. Polypropylene is preferably isotactic or essentially isotactic polypropylene.

In the context of the present invention, polystyrene is not only understood to mean homopolymers of styrene, but also copolymers with acrylonitrile, 1,3-butadiene, (meth)acrylic acid, $C_1$-$C_{10}$-alkyl esters of (meth)acrylic acid, divinylbenzene, especially 1,3-divinylbenzene, 1,2-diphenylethylene and α-methylstyrene.

Another preferred binder is polybutadiene.

Other suitable binders are selected from polyethylene oxide (PEO), cellulose, carboxymethylcellulose, polyimides and polyvinyl alcohol.

In one embodiment of the present invention, binder is selected from those (co)polymers which have an average molecular weight $M_w$ in the range from 50,000 to 1,000,000 g/mol, preferably to 500,000 g/mol.

Binder may be cross-linked or non-cross-linked (co)polymers.

In a particularly preferred embodiment of the present invention, binder is selected from halogenated (co)polymers, especially from fluorinated (co)polymers. Halogenated or fluorinated (co)polymers are understood to mean those (co)polymers which comprise at least one (co)polymerized (co)monomer which has at least one halogen atom or at least one fluorine atom per molecule, more preferably at least two halogen atoms or at least two fluorine atoms per molecule. Examples are polyvinyl chloride, polyvinylidene chloride, polytetrafluoroethylene, polyvinylidene fluoride (PVdF), tetrafluoroethylene-hexafluoropropylene copolymers, vinylidene fluoride-hexafluoropropylene copolymers (PVdF-HFP), vinylidene fluoride-tetrafluoroethylene copolymers, perfluoroalkyl vinyl ether copolymers, ethylene-tetrafluoroethylene copolymers, vinylidene fluoride-chlorotrifluoroethylene copolymers and ethylene-chlorofluoroethylene copolymers.

Suitable binders are especially polyvinyl alcohol and halogenated (co)polymers, for example polyvinyl chloride or polyvinylidene chloride, especially fluorinated (co)polymers such as polyvinyl fluoride and especially polyvinylidene fluoride and polytetrafluoroethylene.

Inventive cathodes may comprise 1 to 15% by weight of binder(s), referring to electrode active material. In other embodiments, inventive cathodes may comprise 0.1 up to less than 1% by weight of binder(s).

A further aspect of the present invention is a battery, containing at least one cathode comprising inventive electrode active material, carbon, and binder, at least one anode, and at least one electrolyte.

Embodiments of inventive cathodes have been described above in detail.

Said anode may contain at least one anode active material, such as carbon (graphite), $TiO_2$, lithium titanium oxide, silicon or tin. Said anode may additionally contain a current collector, for example a metal foil such as a copper foil.

Said electrolyte may comprise at least one non-aqueous solvent, at least one electrolyte salt and, optionally, additives.

Non-aqueous solvents for electrolytes can be liquid or solid at room temperature and is preferably selected from among polymers, cyclic or acyclic ethers, cyclic and acyclic acetals and cyclic or acyclic organic carbonates.

Examples of suitable polymers are, in particular, polyalkylene glycols, preferably poly-$C_1$-$C_4$-alkylene glycols and in particular polyethylene glycols. Polyethylene glycols can here comprise up to 20 mol% of one or more $C_1$-$C_4$-alkylene glycols. Polyalkylene glycols are preferably polyalkylene glycols having two methyl or ethyl end caps.

The molecular weight $M_w$ of suitable polyalkylene glycols and in particular suitable polyethylene glycols can be at least 400 g/mol.

The molecular weight $M_w$ of suitable polyalkylene glycols and in particular suitable polyethylene glycols can be up to 5 000 000 g/mol, preferably up to 2 000 000 g/mol.

Examples of suitable acyclic ethers are, for example, diisopropyl ether, di-n-butyl ether, 1,2-dimethoxyethane, 1,2-diethoxyethane, with preference being given to 1,2-dimethoxyethane.

Examples of suitable cyclic ethers are tetrahydrofuran and 1,4-dioxane.

Examples of suitable acyclic acetals are, for example, dimethoxymethane, diethoxymethane, 1,1-dimethoxyethane and 1,1-diethoxyethane.

Examples of suitable cyclic acetals are 1,3-dioxane and in particular 1,3-dioxolane.

Examples of suitable acyclic organic carbonates are dimethyl carbonate, ethyl methyl carbonate and diethyl carbonate.

Examples of suitable cyclic organic carbonates are compounds according to the general formulae (II) and (III)

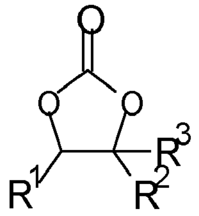

(II)

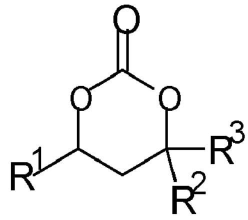

(III)

where $R^1$, $R^2$ and $R^3$ can be identical or different and are selected from among hydrogen and $C_1$-$C_4$-alkyl, for example methyl, ethyl, n-propyl, isopropyl, n-butyl, isobutyl, sec-butyl and tert-butyl, with $R^2$ and $R^3$ preferably not both being tert-butyl.

In particularly preferred embodiments, $R^1$ is methyl and $R^2$ and $R^3$ are each hydrogen, or $R^1$, $R^2$ and $R^3$ are each hydrogen.

Another preferred cyclic organic carbonate is vinylene carbonate, formula (IV).

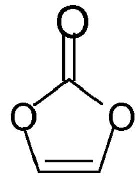

(IV)

The solvent or solvents is/are preferably used in the water-free state, i.e. with a water content in the range from 1 ppm to 0.1% by weight, which can be determined, for example, by Karl-Fischer titration.

Electrolyte (C) further comprises at least one electrolyte salt. Suitable electrolyte salts are, in particular, lithium salts. Examples of suitable lithium salts are $LiPF_6$, $LiBF_4$, $LiClO_4$, $LiAsF_6$, $LiCF_3SO_3$, $LiC(C_nF_{2n+1}SO_2)_3$, lithium imides such as $LiN(C_nF_{2n+1}SO_2)_2$, where n is an integer in the range from 1 to 20, $LiN(SO_2F)_2$, $Li_2SiF_6$, $LiSbF_6$, $LiAlCl_4$ and salts of the general formula $(C_nF_{2n+1}SO_2)_tYLi$, where m is defined as follows:

t = 1, when Y is selected from among oxygen and sulfur,
t = 2, when Y is selected from among nitrogen and phosphorus, and
t = 3, when Y is selected from among carbon and silicon.

Preferred electrolyte salts are selected from among $LiC(CF_3SO_2)_3$, $LiN(CF_3SO_2)_2$, $LiPF_6$, $LiBF_4$, $LiClO_4$, with particular preference being given to $LiPF_6$ and $LiN(CF_3SO_2)_2$.

In an embodiment of the present invention, batteries according to the invention comprise one or more separators by means of which the electrodes are mechanically separated. Suitable separators are polymer films, in particular porous polymer films, which are unreactive toward metallic lithium. Particularly suitable materials for separators are polyolefins, in particular film-forming porous polyethylene and film-forming porous polypropylene.

Separators composed of polyolefin, in particular polyethylene or polypropylene, can have a porosity in the range from 35 to 45%. Suitable pore diameters are, for example, in the range from 30 to 500 nm.

In another embodiment of the present invention, separators can be selected from among PET nonwovens filled with inorganic particles. Such separators can have porosities in the range from 40 to 55%. Suitable pore diameters are, for example, in the range from 80 to 750 nm.

Batteries according to the invention further comprise a housing which can have any shape, for example cuboidal or the shape of a cylindrical disk or a cylindrical can. In one variant, a metal foil configured as a pouch is used as housing.

Cathodes (A) for all-solid state batteries comprise an inventive cathode active material in combination with conductive carbon and solid electrolyte (C). Cathodes (A) further comprise a current collector, for example an aluminum foil or copper foil or indium foil, preferably an aluminum foil.

Examples of conductive carbon are soot, active carbon, carbon nanotubes, graphene, and graphite, and combinations of at least two of the foregoing.

In a preferred embodiment of the present invention, inventive cathodes contain

(1) 70 to 96 % by weight inventive cathode active material,

(2) 2 to 10 % by weight of conductive carbon,
(3) 2 to 28 % by weight of solid electrolyte (C),

percentages referring to the sum of (1), (2) and (3).

Said anode (B) contains at least one anode active material, such as silicon, tin, indium, silicon-tin alloys, carbon (graphite), $TiO_2$, lithium titanium oxide, for example $Li_4Ti_5O_{12}$ or $Li_7Ti_5O_{12}$ or combinations of at least two of the foregoing. Said anode may additionally contain a current collector, for example a metal foil such as a copper foil.

Inventive electrochemical cells further comprise

(C) a solid electrolyte comprising lithium, sulfur and phosphorus, hereinafter also referred to as electrolyte (C) or solid electrolyte (C).

In this context, the term "solid" refers to the state of matter at ambient temperature.

In one embodiment of the present invention, solid electrolyte (C) has a lithium-ion conductivity at 25 °C of ≥ 0.1 mS/cm, preferably in the range of from 0.1 to 30 mS/cm, measurable by, e.g., by impedance spectroscopy.

In one embodiment of the present invention, solid electrolyte (C) comprises $Li_3PS_4$, yet more preferably orthorhombic $\beta$-$Li_3PS_4$.

In one embodiment of the present invention, solid electrolyte (C) is selected from the group consisting of $Li_2S$-$P_2S_5$, $Li_2S$-$P_2S_5$-LiI, $Li_2S$-$P_2S_5$-$Li_2O$, $Li_2S$-$P_2S_5$-$Li_2O$-LiI, $Li_2S$-$SiS_2$-$P_2S_5$-LiI, $Li_2S$-$P_2S_5$-$Z_mS_n$ wherein m and n are positive numbers and Z is a member selected from the group consisting of germanium, gallium and zinc, $Li_2S$-$SiS_2$-$Li_3PO_4$, $Li_2S$-$SiS_2$-$Li_yPO_z$, wherein y and z are positive numbers, $Li_7P_3S_{11}$, $Li_3PS_4$, $Li_{11}S_2PS_{12}$, $Li_7P_2S_8I$, and $Li_{7-r-2s}PS_{6-r-s}X_r$ wherein X is chlorine, bromine or iodine, and the variables are defined as follows:

$0.8 \leq r \leq 1.7$

$0 \leq s \leq (-0.25\ r) + 0.5.$

A particularly preferred example of solid electrolytes (C) is $Li_6PS_5Cl$, thus, r = 1.0 and s = zero.

In one embodiment of the present invention, electrolyte (C) is doped with at least one of Si, Sb, Sn. Si is preferably provided as element. Sb and Sn are preferably provided as sulfides.

In one embodiment of the present invention, inventive electrochemical cells comprise solid electrolyte (C) in a total amount of from 1 to 50 % by weight, preferably of from 3 to 30 % by weight, relative to the total mass of the cathode (A).

Inventive electrochemical cells further contain a housing.

Inventive electrochemical cells may be operated - charged and discharged - with an internal pressure in the range of from 0.1 to 300 MPa, preferably 1 to 100 MPa.

Inventive electrochemical cells may be operated at a temperature in the range of from -50°C to +200°C, preferably from -30°C to +120°C.

Inventive electrochemical cells show excellent properties even after multiple cycling, including very low capacity fading.

A further aspect of the present invention relates to a process for making inventive electrochemical cells, hereinafter also referred to as inventive process. The inventive process comprises the steps of

($\beta$) mixing an inventive cathode active material (a) with carbon in electrically conductive form (b) and, optionally, with a binder (c) or with solid electrolyte (C), and either
($\gamma$1) applying the mixture resulting from step ($\beta$) to a current collector, or
($\gamma$2) pelletizing the mixture resulting from step ($\beta$).

Inventive cathode active material (a) and carbon in electrically conductive form (2) and solid electrolyte (C) and binder (c) have been described above. By the above steps, a cathode (A) is obtained.

Step ($\beta$) may be performed in a mill, for example a ball mill.

Step ($\gamma$1) may be performed with a squeegee, with a doctor blade, by drop casting, spin coating, or spray coating. Step ($\gamma$1) is preferably performed in the presence of a solvent.

Step ($\gamma$2) may be performed by compressing a dry powder in a die or in a mold. Step ($\gamma$2) is performed in the absence of a solvent

Examples of binders are especially fluorinated polymers such as, but not limited to polyvinylidenfluoride (PVdF).

Inventive lithium ion batteries have a high volumetric and gravimetric energy density, a long cycle life and excellent safety and thermal stability.

The invention is further illustrated by working examples.

General remark: sccm: cubic centimeter per minute under standard conditions - 1 atm at 25°C

I. Manufacture of inventive cathode active materials

I.1. Providing a precursor for cathode active materials

A stirred tank reactor was filled with deionized water and tempered to 45°C. Then, a pH value of 11.3 was adjusted by adding an aqueous sodium hydroxide solution.

The co-precipitation reaction was started by simultaneously feeding an aqueous transition metal sulfate solution and aqueous sodium hydroxide solution at a flow rate ratio of 1.9, and a total flow rate resulting in an average residence time of 12 hours. The transition metal solution contained Ni and Mn at a molar ratio of 1 : 2 and a total transition metal concentration of 1.65 mol/kg. The aqueous sodium hydroxide solution was a 50 wt.% sodium hydroxide solution. The pH value was kept at 11.3 by the separate feed of the aqueous sodium hydroxide solution. Beginning with the start-up of all feeds, mother liquor was removed continuously. After 29 hours all feed flows were stopped. The mixed transition metal (TM) oxyhydroxide precursor was obtained by filtration of the resulting suspension, washing with distilled water, drying at 120°C in air and sieving. A precursor TM-OH.1 was obtained, average particle diameter (D50) 6 $\mu$m.

1.2. Manufacture of a non-treated cathode active material, step (a.1)

B-CAM.1 (base CAM): TM.1-OH was mixed with $Li_2CO_3$ to in a Li/TM molar ratio of 1.15:1. The mixture was heated to 970°C and kept for 5 hours in a forced flow of a mixture of 20% oxygen and 80% nitrogen (by volume). After cooling to ambient temperature, the powder was deagglomerated and sieved through a 32 $\mu$m mesh to obtain the base material B-CAM 1.

The D50 of the electrode active material B-CAM.1 was 5.85 $\mu$m, determined using the technique of LASER diffraction in a Mastersize 3000 instrument from Malvern Instruments. Residual moisture at 250 °C was determined to be 650 ppm.

1.3 Manufacture of inventive cathode active materials

1.3.1 Manufacture of inventive CAM.1

A fluidized bed reactor with vibration generator, Technion on Beneq's ALD TFS-200-189, was charged with 20 g B-CAM.1 at 150°C and fluidized with carrier gas, $N_2$ (99.997% purity by volume). The gas flow rate of the carrier gas was 60 sccm. A 50 ml Swagelock container was charged with trimethyl aluminum at 25°C. In another Swagelock container, lithium tert.-butoxide was kept at 180°C. Each cycle included the following step:

- a 0.5 second pulse with trimethyl aluminum, 60 sccm carrier gas, step (b.1),
- a two-minute purging with carrier gas only, 100 sccm,
- ozone pulse for 1 second, step (c.1),
- a one-minute purging with carrier gas only, 100 sccm,
- a 5-second pulse with lithium tert.-butoxide, 60 sccm carrier gas, step (d.1),
- a one-minute purging with carrier gas only, 100 sccm.

Step (e.1): Steps (b.1) to (d.1) were carried out 20 times.

Inventive CAM.1 was obtained. It could be shown by TEM that the outer surface of particles of CAM.1 were non-homogeneously coated with a combination of $Al_2O_3$ and $Li_5AlO_4$, molar ratio of 1:4 to 1:5.

1.3.2 Manufacture of inventive CAM.2

The fluidized bed reactor with vibration generator from 1.3.1 was charged with 20 g B-CAM.1 at 240°C and fluidized with carrier gas, $N_2$ (99.997% purity by volume). The gas flow rate of the carrier gas was 40 sccm. A 50 ml Swagelock container was charged with trimethyl aluminum at 25°C. In another Swagelock container, sodium tert.-butoxide was kept at 270°C. Each cycle included the following step:

- a 0.5 second pulse with trimethyl aluminum, 40 sccm carrier gas, step (b.2),
- a five-minute purging with carrier gas only, 60 sccm,
- ozone pulse for 1 second, step (c.2),
- a seven-minute purging with carrier gas only, 60 sccm,
- ten 1-second pulses with 5-second breaks between two pulses each, with sodium tert.-butoxide, 40 sccm carrier gas, step (d.2),

- a five-minute purging with carrier gas only, 60 sccm.

Step (e.2): Steps (b.2) to (d.2) were carried out 20 times. Inventive cathode active material CAM.2 was obtained. It could be shown by TEM that the outer surface of particles of CAM.2 were non-homogeneously coated with a combination of $Al_2O_3$, $Li_5AlO_4$ and $Na_5AlO_4$, molar ratio 1 : 4 : 7 to 1 : 5 : 9.

II. Cell Manufacture and testing

II.1 Electrolyte Manufacture

A base electrolyte composition was prepared containing 1M $LiPF_6$, 1:4 (w/w) fluoroethylene carbonate : diethyl carbonate.

11.2 Cathode manufacture and others

Positive electrode: PVDF binder (Solef® 5130) was dissolved in NMP (Merck) to produce a 10 wt.% solution. For electrode preparation, binder solution (3.5 wt.%), carbon black (Super C65, 4 wt.-%) were slurried in NMP. After mixing using a planetary centrifugal mixer (ARE-250, Thinky Corp.; Japan), either any of inventive CAM.1 to or CAM.2 or a comparative cathode active material, for example B-CAM.1 (92.5 wt.%) was added and the suspension was mixed again to obtain a lump-free slurry. The solid content of the slurry was adjusted to 62.3%. The slurry was coated onto 15 μm thick Al foil using a Erichsen auto coater. The loading was 6 to 7 $mg/cm^2$. Prior to further use, all electrodes were calendared. The thickness of cathode material was 38 μm, corresponding to 9 $mg/cm^2$. All electrodes were dried at 105°C for 12 hours before battery assembly.

A polypropylene separator commercially available from Cellgard was used.

Lithium anodes served as counter-electrodes.

Coin-type half cells (20 mm in diameter and 3.2 mm in thickness) comprising a cathode prepared as described under II.1 and lithium metal as working and counter electrode, respectively, were assembled and sealed in an Ar-filled glove box. In addition, the cathode and anode and a separator were superposed in order of cathode // separator // Li foil to produce a half coin cell. Thereafter, 0.15 mL of the EL base 1 which is described above (11.1) were introduced into the coin cell.

The cycling results are summarized in Table 1.

| Sample (1 C discharge) | 10th | 50th | 100th | 150th | 200th | 250th | 300th | 350th | 400th | $Q_{10}/Q_{40}$ 0 [%] |
|---|---|---|---|---|---|---|---|---|---|---|
| | | | | | [mAh/g] | | | | | |
| B-CAM.1 | 220±0.9 | 190±0. 5 | 156±5 | 159±3 | 138±4.3 | 110±0. 5 | 84±1 | 75±12 | 63±10 | 28.6% |
| CAM.1 | 219±0.2 | 224±0. 3 | 211±0.9 | 195±1.7 | 177±1.7 | 154±0. 6 | 131±1.1 | 113±2 | 101±1.1 | 46.1% |
| CAM.2 | 212±0.8 | 221±0. 9 | 214±1.3 | 204±1.5 | 192±1.8 | 177±2. 2 | 162±2.5 | 145±0.3 | 130±0.1 | 61.3% |

Table 2: Cycling protocol:

| # | Step | Cycling conditions | C-rate Charge | C-rate discharge | No of cycles |
|---|---|---|---|---|---|
| 1 | Activation | 4.8 - 2.0 V vs $Li^+/Li$ | C/15-CC | C/15-CC | 1 |
| 2 | Stabilization | 4.7 - 2.0 V vs $Li^+/Li$ | C/10-CC | C/10-CC | 3 |
| 3 | DCIR | | | | 1 |
| 3a | Charge | Until 40% SOC | C/10-CC | - | |
| 3b | OCV | 1h | - | - | |
| 3c | Discharge pulse | 1 s + 10 s | - | C/2-CC | |
| 3d | Discharge | 2.0 V vs. $Li^+/Li$ | - | C/10-CC | |
| 4 | Fast cycling | 4.7 - 2.0 V vs $Li^+/Li$ | C/2-CCCV | 3C-CC | 3 |
| 5 | Slow cycling | 4.7 - 2.0 V vs $Li^+/Li$ | C/2-CCCV | 1C-CC | 33 |
| 6 | Back to #2 | | | | |

## Claims

1. Process for making an at least partially coated electrode active material wherein said process comprises the following steps:

    (a) providing an electrode active material according to general formula $Li_{1+x}TM_{1-x}O_2$ wherein TM is a combination of Ni, Mn and, optionally, Co, and, optionally, at least one metal selected from Al, Mg, Nb, Ta, Zr, Ti and Zr, and x is in the range of from 0.05 to 0.2, and wherein the Mn content is at least 55 mol-% referring to TM,
    (b) treating said electrode active material with at least one metal alkyl compound or at least one metal alkoxide,
    (c) treating the material obtained in step (b) with an oxidant or moisture,
    (d) treating the material obtained from step (c) with a compound according to formula $M^1OR^1$ wherein $M^1$ is selected from Li, Na and K and wherein $R^1$ is selected from isopropyl, n-butyl and tert.-butyl, and wherein $M^1OR^1$ is different from the metal alkoxide in step (b)
    (e) repeating the sequence of steps (b) to (d) from one to 30 times,

    wherein steps (b) to (e) are performed in the gas phase.

2. Process according to claim 1 wherein the alkyl metal compound in step (b) is selected from trimethyl aluminum and triethyl aluminum.

3. Process according to claim 1 or 2 wherein the oxidant in step (c) is selected from a mixture of ozone and oxygen.

4. Process according to any of the preceding claims wherein said process comprises an additional thermal post-treatment step (f).

5. Process according to any of the preceding claims wherein steps (b) to (e) are performed in a rotary kiln, a free fall mixer, in a continuous vibrating bed or a fluidized bed.

6. Process according to any of the preceding steps wherein between each step (b) and (c) and (d) a flushing step is performed.

7. Process according to any of the preceding claims wherein the electrode active material provided in step (a) has a specific surface (BET) in the range of from 0.4 to 4.0 $m^2/g$.

8. Process according to any of the preceding claims wherein TM is a combination of metals according to general formula (I)

$$(Ni_aCo_bMn_c)_{1-d}M_d \qquad (I)$$

with

a being in the range of from 0.2 to 0.4,
b being in the range of from zero to 0.2,
c being in the range of from 0.6 to 0.8, and
d being in the range of from zero to 0.1,
M is selected from Al, Mg, Ti, Zr and Nb, and

a+b+c=1.

**9.** Particulate cathode active material according to general formula $Li_{1+x}TM_{1-x}O_2$ wherein TM is a combination of Ni, Mn and, optionally, Co, and, optionally, at least one metal selected from Al, Mg, Nb, Ta, Zr, Ti and Zr, and x is in the range of from 0.05 to 0.2, wherein the outer surface of said particles is non-homogeneously coated with a combination of $Al_2O_3$, $Li_5AlO_4$ or $Li_2TiO_3$ or $Li_4TiO_5$ or $Li_2ZrO_3$ and, optionally, at least one of $Na_5AlO_4$, $Na_2TiO_3$, $Na_2Ti_3O_7$ and $Na_2ZrO_3$.

**10.** Particulate cathode active material according to claim 9 wherein TM is a combination of metals according to general formula (I)

$$(Ni_aCo_bMn_c)_{1-d}M_d \qquad (I)$$

with

a being in the range of from 0.2 to 0.4,
b being in the range of from zero to 0.2,
c being in the range of from 0.6 to 0.8, and
d being in the range of from zero to 0.1,
M is selected from Al, Mg, Ti, Zr and Nb, and

$$a + b + c = 1.$$

**11.** Particulate cathode active material according to any of claims 9 or 10 wherein the molar ratio of $Li_5AlO_4$ and $Na_5AlO_4$ is in the range of from 1:1 to 1:2.

**12.** Particulate cathode active material according to any of claims 9 to 11 wherein said coating comprises at least one further lithiated aluminum oxide species.

**13.** Particulate cathode active material according to any of claims 9 to 12 wherein said coating additionally comprises at least one compound selected from $LiAlO_2$ and $LiAl_5O_8$.

**14.** Use of a particulate cathode active material according to any of claims 9 to 13 in or for the manufacture of a lithium ion battery.

**15.** Use of a particulate cathode active material according to any of claims 9 to 13 in or for the manufacture of an all-solid-state lithium ion battery.

Europäisches Patentamt
European Patent Office
Office européen des brevets

# EUROPEAN SEARCH REPORT

Application Number
EP 20 19 2751

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BLOOM IRA ET AL: "Effect of interface modifications on voltage fade in 0.5Li2MnO3.0.5LiNi0.375Mn0.375Co0.25O2cathode materials", JOURNAL OF POWER SOURCES, ELSEVIER SA, CH, vol. 249, 18 October 2013 (2013-10-18), pages 509-514, XP028804725, ISSN: 0378-7753, DOI: 10.1016/J.JPOWSOUR.2013.10.035 | 1-4, 6-10,14, 15 | INV. H01M4/1391 H01M4/36 H01M4/505 H01M4/62 |
| Y | * 2. Experimental * | 5 | |
| A | | 11 | |
| X | JP 2017 084673 A (JX NIPPON MINING & METALS CORP) 18 May 2017 (2017-05-18) * paragraphs [0009], [0010], [0024], [0028] * | 9,12-15 | |
| Y | SEOK JUNG YOON ET AL: "Effects of Atomic Layer Deposition of Al2O3 on the Li[Li0.20Mn0.54Ni0.13Co0.13]O2 Cathode for Lithium-Ion Batteries", JOURNAL OF THE ELECTROCHEMICAL SOCIETY, vol. 158, no. 12, 1 January 2011 (2011-01-01), page A1298, XP055774408, ISSN: 0013-4651, DOI: 10.1149/2.030112jes * Experimental; Conclusions; figures 3,4 * | 5 | TECHNICAL FIELDS SEARCHED (IPC) H01M |
| L | YOON SEOK JUNG ET AL: "Enhanced Stability of LiCoO[sub 2] Cathodes in Lithium-Ion Batteries Using Surface Modification by Atomic Layer Deposition", JOURNAL OF THE ELECTROCHEMICAL SOCIETY, vol. 157, no. 1, 1 January 2010 (2010-01-01), page A75, XP055191607, ISSN: 0013-4651, DOI: 10.1149/1.3258274 | 5 | |

-/--

The present search report has been drawn up for all claims

1

| Place of search | Date of completion of the search | Examiner |
|---|---|---|
| Munich | 10 February 2021 | Raimondi, Fabio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches Patentamt
European Patent Office
Office européen des brevets

# EUROPEAN SEARCH REPORT

Application Number
EP 20 19 2751

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (IPC) |
| A | XIFEI LI ET AL: "Atomic layer deposition of solid-state electrolyte coated cathode materials with superior high-voltage cycling behavior for lithium ion battery application", ENERGY & ENVIRONMENTAL SCIENCE, vol. 7, no. 2, 1 January 2014 (2014-01-01), pages 768-778, XP055191392, ISSN: 1754-5692, DOI: 10.1039/C3EE42704H * Section 2.2 * ----- | 1-15 | |
| A | LI JIWEN ET AL: "Li2TiO3 and Li2ZrO3 co-modification LiNi0.8Co0.1Mn0.1O2 cathode material with improved high-voltage cycling performance for lithium-ion batteries", SOLID STATE IONICS, vol. 349, 1 June 2020 (2020-06-01), page 115292, XP055773796, NL ISSN: 0167-2738, DOI: 10.1016/j.ssi.2020.115292 * Sections 3.1 and 4 * ----- | 1-15 | TECHNICAL FIELDS SEARCHED (IPC) |
| A | US 2016/276658 A1 (CHOI SU AN [KR] ET AL) 22 September 2016 (2016-09-22) * example 2; table 2 * ----- | 1-15 | |

1

The present search report has been drawn up for all claims

| Place of search | Date of completion of the search | Examiner |
|---|---|---|
| Munich | 10 February 2021 | Raimondi, Fabio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 20 19 2751

This annex lists the patent family members relating to the patent documents cited in the above-mentioned European search report. The members are as contained in the European Patent Office EDP file on
The European Patent Office is in no way liable for these particulars which are merely given for the purpose of information.

10-02-2021

| Patent document cited in search report | Publication date | Patent family member(s) | Publication date |
|---|---|---|---|
| JP 2017084673 A | 18-05-2017 | JP 6533733 B2 | 19-06-2019 |
| | | JP 2017084673 A | 18-05-2017 |
| US 2016276658 A1 | 22-09-2016 | KR 20150063956 A | 10-06-2015 |
| | | US 2016276658 A1 | 22-09-2016 |
| | | WO 2015083900 A1 | 11-06-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 8993051 B
- EP 3486980 A
- JP 4789066 B
- JP 5139024 B
- US 20150372300 A